**Europäisches Patentamt**

**European Patent Office**

**Office européen des brevets**

(19)

(11) Veröffentlichungsnummer: **0 018 964**
**A1**

(12)
# EUROPÄISCHE PATENTANMELDUNG

(21) Anmeldenummer: **80890046.8**

(22) Anmeldetag: **17.04.80**

(51) Int. Cl.³. **H 02 K 31/00**

(30) Priorität: **25.04.79 AT 3112/79**

(43) Veröffentlichungstag der Anmeldung:
**12.11.80 Patentblatt 80 23**

(84) Benannte Vertragsstaaten:
**AT BE CH DE FR GB IT LI LU NL SE**

(71) Anmelder **Wittmann, Franz**
**Favoritenstrasse 169'13**
**A-1100 Wien(AT)**

(72) Erfinder: **Wittmann, Franz**
**Favoritenstrasse 169'13**
**A-1100 Wien(AT)**

(74) Vertreter. **Krause, Ernst, Dipl.-Ing. et al,**
**Dipl.- Ing. Krause Ernst Dipl. Ing. Casati Wilhelm**
**Patentanwälte Amerlingstrasse 8**
**A-1060 Wien(AT)**

(54) **Unipolarmaschine.**

(57) Der Anker (2) der Unipolarmaschine ist als Rohr ausgebildet und besitzt wenigstens eine vollständige Wicklung (3), deren Windungen jeweils eine Ankerhälfte in Längsrichtung innen und außen umschlingen. entgegengesetzt gewickelt bzw elektrisch gegensinnig zusammengeschaltet sind Die Enden der Ankerwicklungen sind zu Schleifringen (8) auf der Ankerwelle geführt. Der Stator (1) umschließt unter Belassung eines Luftspaltes den Rohranker. Der Stator weist innenseitig eine ringförmige Ausnehmung (10) auf, wobei beidseits der Ausnehmung Statorteile vorstehen, die radial und entgegengesetzt magnetisierbare Polschuhe darstellen. Da Anker und Stator aus Rotationskörpern bestehen, ist die Maschine einfach. Durch Unterbringung der Erregerwicklung (6) (soferne keine dauermagnetische Erregung vorgesehen ist), in einer Ringnut des Stators ermöglicht kleine Luftspalte und einen praktisch vollkommenen Schutz der Wicklung gegen Beschädigungen

EP 0 018 964 A1

./...

Fig.1

## Unipolarmaschine

Die Erfindung betrifft eine Unipolarmaschine, bei der der Anker als ein- oder mehrteiliges zylindrisches Rohr ausgebildet ist, mit einem den Anker unter Bildung eines Luftspaltes umschließenden Stator, der auf seiner Innenseite eine ringförmige Ausnehmung aufweist und die beiderseits der ringförmigen Ausnehmung vorstehenden Statorteile Polschuhe darstellen, die radial und entgege-ngesetzt magnetisierbar sind, und gegebenenfalls eine koaxial angeordnete, zylindrische Erregerwicklung vorgesehen ist.

Eine Maschine dieser Bauart ist beispielswese in der DE-AS 2 537 548 beschrieben. Ein wesentlicher Nachteil der bekannten Maschine ist ihr komplizierter Aufbau. Eine Wicklungshälfte ist nämlich im Stator, die andere hingegen im Rotor untergebracht. Ihre Verbindung zu einer geschlossenen Schleife erfolgt über als Flüssigkeitskontakte ausgebildete Schleifringe. Die Erregerspule befindet sich, konzentrisch zur Ankerwelle angeordnet, in der Mitte der Maschine, und sie weist einen Durchmesser auf, der kleiner ist als der innere Durchmesser der beiden nebeneinanderliegenden rohrförmigen Ankerstücke. Dabei kommt es zur Bildung von sehr großen Luftspalten, wodurch der Wirkungsgrad der Maschine, die übrigens mit supraleitenden Wicklungen ausgestattet ist, herabgesetzt wird.

Auch eine aus der FR-PS 374 749 bekanntgewordene Unipolarmaschine stellt ein ziemlich kompliziertes Gebilde dar, denn der sternförmige Anker besteht aus Eisenblechen, die entsprechend der Richtung der Kraftlinien gebogen sind. Der Stator hingegen weist seitlich vorspringende Arme auf, von denen jeder mit einer eigenen Wicklung versehen ist.

Nicht minder kompliziert ist eine in der DE-PS 50 805 beschriebene dynamoelektrische einpolige Maschine, deren Anker aus zwei ineinander geschobenen, voneinander isolierten Röhren gebildet ist, die zur Verhinderung des Auftretens von störenden Querströmen der Länge nach, parallel zur Achse, mehrmals gespalten oder aufgeschnitten sind.

Auch die sonstigen, derzeit bekannten Unipolarmaschinen, bei denen der Anker selbst als Leiter wirkt, konnten sich nicht durchsetzen, denn sie liefern im allgemeinen nur sehr niedrige Spannungen bei hohen Stromstärken, so daß zur Fortleitung des Stromes sehr große Leiterquerschnitte erforderlich sind. Um die Verluste in der Maschine bewältigen zu können, werden sie im allgemeinen mit Supraleitungen ausgestattet, für deren Betrieb wieder besondere Kältemaschinen vorgesehen sein müssen.

Um die vorgenannten Mängel der bekannten Unipolarmaschinen zu beheben, schlägt die Erfindung eine Maschine vor, die sich durch eine klare und einfache Konstruktion auszeichnet und in der Herstellung und im Betrieb billiger kommt als jede andere Maschine. Dieses Ziel wird bei einer Unipolarmaschine der eingangs beschriebenen Art dadurch erreicht, daß der als ein- oder mehrteiliges zylindrisches Rohr ausgebildete Anker mit wenigstens einer vollständigen Wicklung versehen ist, deren Windungen jeweils eine Ankerhälfte in der Längsrichtung innen und außen umschlingen und entgegengesetzt gewickelt oder elektrisch gegensinnig zusammengeschaltet sind, und die Enden der auf dem Anker befindlichen Wicklungen zu auf der Ankerwelle montierten Schleifringen geführt sind, und daß die gegebenenfalls vorgesehene Erregerwicklung feststehend oder beweglich zur Gänze innerhalb der ringförmigen Ausnehmung des Stators untergebracht ist. Eine solche Maschinenkonstruktion ist von bestechender Einfachheit, da sowohl der Anker als auch der Stator aus unkomplizierten Rotationskörpern besteht. Die Unterbringung der Erregerwicklung, soferne keine dauermagnetische Erregung vorgesehen ist, in einer ringförmigen Nut des Stators ermöglicht kleine Luftspalte und einen praktisch vollkommenen Schutz der Wicklung gegen Beschädigungen.

Beim einfachsten Ausführungsbeispiel der Erfindung besteht der Anker aus einem einzigen Rohrstück, das in seiner Längsrichtung mit einer achterförmigen Wicklung versehen ist, deren im Kreuzungspunkt der Acht liegenden, von außen nach innen bzw. umgekehrt verlaufenden Windungsteile durch Bohrungen oder sonstige Durchbrechungen etwa in der Mitte des rohrformigen Ankers hindurchgeführt sind.

Man kann den Anker aber auch aus zwei achsparallel nebeneinander angeordneten Rohrstücken herstellen, von denen jedes in der Art eines Ringkernes bewickelt ist, wobei die Wicklungen entweder gegensinnig aufgebracht oder bei gleichem Wicklungssinne entgegengesetzt elektrisch zusammengeschaltet sind.

Vorteilhafterweise ist der rohrförmige Anker an seinen Stirnseiten über Speichenräder mit der Ankerwelle verbunden, wobei zur Erzeugung eines Kühlluftstromes durch das Ankerinnere die Speichen als Ventilatorflügel ausgebildet sein können.

Für den Fall, daß die erfindungsgemäße Maschine für Wechselstrombetrieb geeignet sein soll, läßt sich ein praktisch wirbelstromfreier Anker durch einfaches spiraliges Aufwickeln eines beliebig dünnen, einseitig isolierten Weicheisenbleches herstellen, das über einen den gewünschten Innendurchmesser des Ankerrohres aufweisenden zylindrischen Dorn so lange aufgewickelt wird, bis die erforderliche Wandstärke erreicht ist.

Weitere Einzelheiten der Erfindung können der folgenden Beschreibung an Hand der Zeichnung entnommen werden, in der

Fig. 1 einen schematischen Längsschnitt durch ein Ausführungsbeispiel der erfindungsgemäßen Maschine zeigt und

Fig. 2 eine schematische Seitenansicht derselben ist.

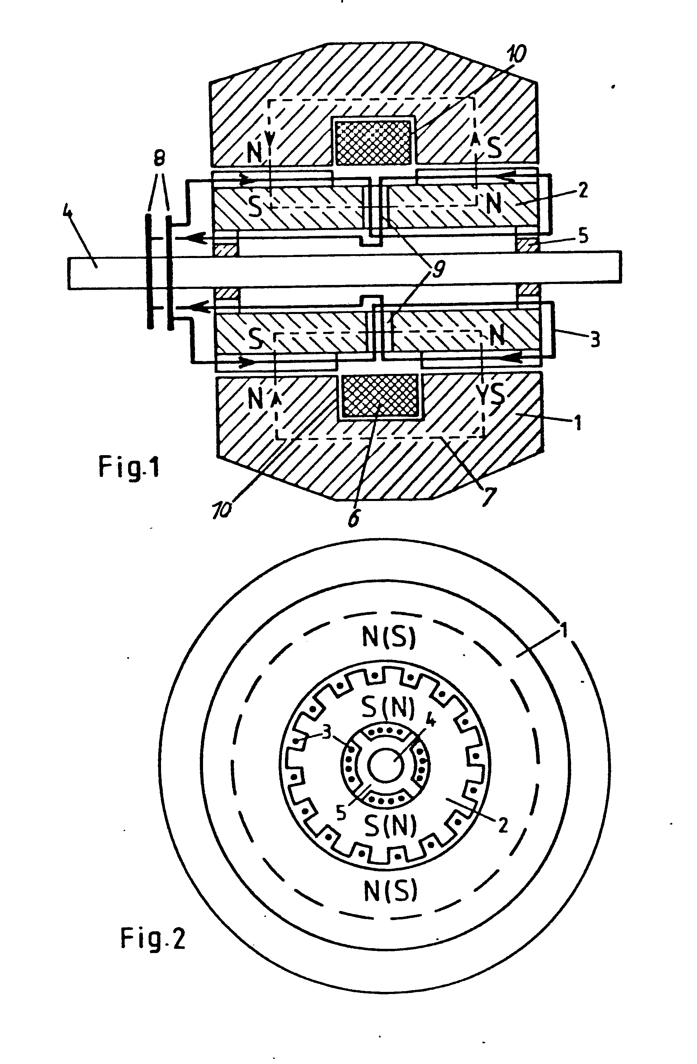

Wie die Fig. 1 und 2 der Zeichnung erkennen lassen, ist auf einer Welle 4 mittels der Speichenräder 5 der rohrförmige Anker 2 befestigt. Im Bereich des einen (in Fig. 1 des linken) Ankerendes sind auf der Welle 4 zwei Schleifringe 8 aufgezogen, an die jeweils ein Ende der Ankerwicklung 3 angeschlossen ist. Die Ankerwicklung ist achterförmig ausgebildet, u.zw. so, daß die Schleifen im Falle eines Stromflusses im Gegensinne durchflossen werden. Ist die Wicklung nicht achterförmig ausgebildet, sondern beispielsweise aus zwei Wicklungen nebeneinander am Anker 2 zusammengesetzt, dann müssen entweder beide Wicklungsteile entgegengesetzten Wicklungssinn haben oder sie werden elektrisch in der Weise zusammengeschaltet, daß die Ströme in den Teilwicklungen entgegengesetzt gerichtet sind. Ein in der Zeichnung ringförmiger Stator 1 umschließt den bewickelten Anker 2 in üblicher Weise, wobei sich die an der Außenseite des Ankers 2 befindlichen Windungen der Wicklung 3 in einem Luftspalt zwischen Anker und Stator befinden. Der ringförmige Stator 1 weist in seinem Mittelteil auf der Innenseite eine ringförmige Nut 10 auf, in die eine zur Ankerachse koaxiale Spule 6 eingelegt ist. Diese Spule 3 hat die Aufgabe, ein magnetisches Feld zu erzeugen, dessen Kraftlinien beiderseits der Spule aus dem Stator 1 austreten und sich über den gegenüberliegenden Teil des Ankers 2 schließen. Dabei wird der Luftspalt zwischen Anker 2 und Stator 1 von radial verlaufenden Kraftlinien durchsetzt. In Fig. 1 ist in idealisierter Darstellung oben und unten je eine Kraftlinie strichliert eingezeichnet. Es ist ersichtlich, daß in der linken Hälfte der in Fig. 1 dargestellten Maschine die Kraftlinien entgegengesetzt zu den der rechten Hälfte verlaufen. Auf Grund dieser Tatsache ist es erforderlich, die bereits erwähnte Gegensinnigkeit der beiden Hälften der Ankerwicklung 3 entweder konstruktiv oder schaltungsmäßig herzustellen. Bei der konstruktiven Lösung ist die Ankerwicklung 3 achterförmig ausgeführt, wobei im Kreuzungspunkt der beiden Achterschleifen jeder Windung eine Durchdringung des Ankers 2 erfolgen muß, weshalb dieser etwa in seiner Mittelebene Bohrungen 9 oder sonstige Durchbrechungen aufweist, durch die die entsprechenden Windundungsteile von der Außenseite des Ankers 2 nach innen geführt werden.

Für die Funktion der Maschine ist es wesentlich, daß der Anker 2 eine ausreichende Wandstärke aufweist, so daß im inneren Hohlraum desselben keine magnetischen Kraftlinien des Statorfeldes auftreten. Der Anker 2 muß also so dimensioniert sein, daß er auch bei maximalem Stromfluß durch die Wicklung 3 nicht in die magnetische Sättigung gelangt und die innen liegenden Wicklungsteile der Wicklung 3 sicher gegen das von der Erregerwicklung im Stator 1 erzeugte Feld abschirmt.

Soll die Maschine als Generator arbeiten, wird über einen nicht dargestellten Antrieb die Welle 4 und damit der Anker 2 in Rotation versetzt. Die an der Ankeroberfläche, also außen liegenden und achsparallel verlaufenden Wicklungsteile schneiden dann die im Luftspalt radial gerichteten Kraftlinien des Statorfeldes im wesentlichen senkrecht, was zur Folge hat, daß in der Wicklung eine EMK induziert wird, die einen Stromfluß über an die Schleifringe angeschlossene Verbraucher hervorruft. Da der erzeugte Strom seine Richtung nicht ändert, ist ein Kollektor nicht erforderlich. Es tritt in den Eisenteilen der Maschine auch keine Ummagnetisierung auf, so daß diese nicht aus Einzelblechen zusammengesetzt werden müssen. Eine Lamellierung ist nur dann erforderlich, wenn die Maschine als Motor aus einem Wechselstromnetz gespeist wird. In diesem Falle kommt die Konstruktion der Maschine vorteilhaft zum Tragen, da der Anker sich auf einfachste Weise durch Aufrollen eines beliebig dünnen, einseitig isolierten Weicheisenbleches über einen Dorn mit dem Innendurchmesser des rohrförmigen Ankers herstellen läßt. Gegebenenfalls kann ein Kunststoff-Formkörper mit an seiner Außenseite im wesentlichen achsparallelen Nuten auf den gewickelten Anker aufgeschoben werden, wobei in die Nuten des Kunststoffkörpers die Ankerstäbe der Wicklung 3 einzulegen sind. Selbstverständlich ist dafür zu sorgen, daß Anker und Kunststoffkörper verdrehungsfest miteinander verbunden sind.

Wie bei den bekannten Maschinen mit Anker- und Feldwicklung kann auch bei der erfindungsgemäßen eine Zusammenschaltung dieser beiden Wicklungen vorgenommen werden, so daß sie in einem Falle in Reihe geschaltet sind, im anderen Falle eine Parallelschaltung bilden. Dementsprechend hat die Maschine entweder die Charakteristik beispielsweise eines Reihenschlußmotors oder die eines Nebenschlußmotors. Gegebenenfalls ist auch eine Reihen-Nebenschluß-Kombination möglich, wenn eine besondere Charakteristik gewünscht wird.

Patentansprüche:

1. Unipolarmaschine, bei der der Anker als ein- oder mehrteiliges zylindrisches Rohr ausgebildet ist, mit einem den Anker unter Bildung eines Luftspaltes umschließenden Stator, der auf seiner Innenseite eine ringformige Ausnehmung aufweist und die beiderseits der ringformigen Ausnehmung vorstehenden Statorteile Polschuhe darstellen, die radial und entgegengesetzt magnetisierbar sind, und gegebenenfalls eine koaxial angeordnete, zylindrische Erregerwicklung vorgesehen ist, dadurch gekennzeichnet, daß der als ein- oder mehrteiliges zylindrisches Rohr ausgebildete Anker (2) mit wenigstens einer vollständigen Wicklung (3) versehen ist, deren Windungen jeweils eine Ankerhälfte in der Längsrichtung innen und außen umschlingen und entgegengesetzt gewickelt oder elektrisch gegensinnig zusammengeschaltet sind, und die Enden der auf dem Anker (2) befindlichen Wicklungen (3) zu auf der Ankerwelle montierten Schleifringen (8) geführt sind, und daß die gegebenenfalls vorgesehene Erregerwicklung (6) feststehend oder beweglich zur Gänze innerhalb der ringförmigen Ausnehmung (10) des Stators (1) untergebracht ist.

2. Unipolarmaschine nach Anspruch 1, dadurch gekennzeichnet, daß die Erregerwicklung (6) vorstehend auf dem Anker (2) angeordnet ist und bei zusammengebauter Maschine praktisch vollkommen in die ringförmige Ausnehmung (10) des Stators (1) eintaucht.

3. Unipolarmaschine nach Anspruch 1, dadurch gekennzeichnet, daß die radial und entgegengesetzt magnetisierbaren Polschuhe beiderseits der ringförmigen Ausnehmung (10) des Stators (1) von einem als Stator ausgebildeten Dauermagnet magnetisiert sind.

4. Unipolarmaschine nach einem oder mehreren der Ansprüche 1 bis 3, dadurch gekennzeichnet, daß der rohrformige Anker (2) in seiner Längsrichtung mit einer achterformigen Wicklung (3) versehen ist, deren im Kreuzungspunkt der Acht liegende, von außen nach innen bzw. umgekehrt verlaufende Windungsteile durch Bohrungen (9) oder sonstige Durchbrechungen etwa in der Mitte des rohrförmigen Ankers (2) hindurchgeführt sind.

5. Unipolarmaschine mit einem Anker aus zwei achsparallel nebeneinander angeordneten Rohrstücken, nach einem oder mehreren der Ansprüche 1 bis 3, dadurch gekennzeichnet, daß jedes Rohrstück in der Art eines Ringkernes bewickelt ist, wobei die Wicklungen entweder gegensinnig aufgebracht oder bei gleichem Wicklungssinne entgegengesetzt elektrisch zusammengeschaltet sind.

6. Unipolarmaschine nach einem oder mehreren der Ansprüche 1 bis 5, dadurch gekennzeichnet, daß der rohrförmige Anker (2) an seinen Stirnseiten über Speichenräder (5), deren Speichen vorzugsweise als Ventilatorflügel ausgebildet sind, mit der Ankerwelle fest verbunden ist.

7. Unipolarmaschine nach einem oder mehreren der Ansprüche 1 bis 6, dadurch gekennzeichnet, daß der Anker aus einem mehrlagig aufgewickelten Weicheisenblech besteht.

Fig.1

Fig.2

0018964

.1/1

| | | |
|---|---|---|
| **Europäisches Patentamt** | **EUROPÄISCHER RECHERCHENBERICHT** | Nummer der Anmeldung<br>EP 80 89 0046 |

## EINSCHLÄGIGE DOKUMENTE

| Kategorie | Kennzeichnung des Dokuments mit Angabe soweit erforderlich der maßgeblicher Teile | betrifft Anspruch |
|---|---|---|
| | <u>FR - A - 486 888</u> (KRUYSWIJK) <br> * Seite 2, Zeilen 4-11; Figuren 1,2 * <br><br> -- | 1,5 |
| | <u>FR - A - 422 593</u> (SOLIER) <br> * Seite 1, Zeilen 27-53; Figur 1 * <br><br> -- | 1,2,4 |
| | <u>GB - A - 724 247</u> (MERUNOVICH) <br> * Seite 1, Zeilen 67-77 * <br><br> -- | 3 |
| | <u>DE - B - 1 105 048</u> (HENSCHEL) <br> * Spalte 2, Zeilen 44-54 * <br><br> -- | 7 |
| A | <u>CH - A - 233 654</u> (OERLIKON) <br> * Figur 9 * <br><br> -- | |
| A | <u>GB - A - 920 009</u> (HENSCHEL) | |
| A | <u>GB - A - 728 458</u> (ATOMIC ENERGY) | |
| A | <u>GB - A - 1 185 724</u> (INTERNATIONAL) | 6 |
| A | <u>US - A - 3 581 389</u> (MORI) | 7 |
| A | <u>US - A - 4 116 033</u> (IWAKI) <br><br> ---- | 7 |

**KLASSIFIKATION DER ANMELDUNG (Int Cl )**

H 02 K 31/00

**RECHERCHIERTE SACHGEBIETE (Int Cl )**

H 02 K 31/00
      31/02
      31/04

**KATEGORIE DER GENANNTEN DOKUMENTE**

X von besonderer Bedeutung
A technologischer Hintergrund
O nichtschriftliche Offenbarung
P Zwischenliteratur
T der Erfindung zugrunde liegende Theorien oder Grundsätze
E kollidierende Anmeldung
D in der Anmeldung angeführtes Dokument
L aus andern Gründen angeführtes Dokument
& Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 18-06-1980 | RANDES |

EPA Form 1503 1  06 78